# FASCICULE DE BREVET EUROPEEN

(11) **EP 2 388 428 B1**
(45) Date de publication et mention de la délivrance du brevet: **23.04.2014**
(21) Numéro de dépôt: 11166153.4
(22) Date de dépôt: 16.05.2011
(51) Int. Cl.: E06B 9/15, E06B 9/17, F16B 21/02, E06B 9/00, E06B 9/165

(54) **Dispositif anti-intempéries pour volet roulant et volet roulant le comportant**
Wetterschutzvorrichtung für Rollladen, und diese Vorrichtung umfassender Rollladen
Weatherproof device for a roller shutter and roller shutter comprising same

(30) Priorité: 17.05.2010 FR 1053791
(43) Date de publication de la demande: 23.11.2011
(73) Titulaire: JMD, 97430 Le Tampon (FR)
(72) Inventeur: Dubard, Jean-Max, Tamarin (MU); Eloy, David, 97410, Saint-Pierre (FR)
(74) Mandataire: Bonnans, Arnaud

(56) Documents cités:
- EP-A1- 1 967 685
- WO-A1-2005/088059
- WO-A1-2009/035701
- DE-U1- 29 904 966
- US-A- 3 853 166
- US-A- 4 442 571
- US-A1- 2005 072 533

## Description

La présente invention concerne d'une manière générale les volets roulants pour ouvrants de bâtiments. Plus particulièrement, la présente invention concerne les volets roulants adaptés à résister aux intempéries telles que les tempêtes. Généralement, ce type de volet roulant est composé d'un tablier formé de lames articulées entre elles et dont les extrémités coulissent dans deux rails fixés sur les côtés latéraux de l'ouverture du bâtiment, telle qu'une porte ou une fenêtre.

Dans ce domaine technique, on connaît des dispositifs permettant d'augmenter la résistance d'un volet roulant aux intempéries.

Le document US 20050072533 A correspondant aux préambules des revendications 1 et 9 décrit en particulier un tel dispositif.

En effet, lors de fortes intempéries, comme par exemple une tempête ou un ouragan, les ouvrants d'un bâtiment voient une grande différence de pression entre l'extérieur et l'intérieur du bâtiment. Ainsi, les volets roulants sont soumis à d'importantes contraintes de déformation dues à la différence de pression.

A titre d'exemple, un volet roulant présentant un tablier de 100 cm de large par 250 cm de haut soumis à un vent de 200 km/h voit une pression de 2400 pascals qui déforme le tablier de 20 cm en son centre.

Pour limiter les contraintes de déformation, il a été proposé de fixer des barres sur le volet roulant depuis l'intérieur du bâtiment selon une direction perpendiculaire à la direction longitudinale des lames de manière à limiter leur déformation en cas d'intempéries. Il s'agit de profilés métalliques qui sont vissés sur le tablier à l'aide de vis traversant les lames et insérées depuis l'extérieur du bâtiment. Les barres sont fixées dans un trou ou contre une butée prévue dans le sol, le plafond, ou dans l'encadrement de la porte ou de la fenêtre.

Cette solution présente cependant un certain nombre d'inconvénients. En effet, il est nécessaire de percer le volet pour faire passer les vis de fixation et l'installation nécessite deux personnes, l'une à l'intérieur, l'autre à l'extérieur du bâtiment. De plus, le montage se fait en « aveugle », la personne insérant les vis ne voyant pas les trous correspondant dans la barre verticale. Il en résulte une perte de temps et une forte demande de main d'oeuvre, ce qui est particulièrement contraignant surtout lorsque des intempéries sont à l'approche du bâtiment.

La présente invention vise à résoudre les problèmes exposés ci-dessus en proposant un perfectionnement dans les dispositifs anti-intempéries pour volets roulants.

Elle propose à cet effet un ensemble selon l'objet de la revendication 1.

Ainsi, avantageusement, le montage de la barre sur le volet se fait d'un seul côté, sans avoir à percer le tablier. La présente invention permet à une personne seule d'installer très rapidement une barre verticale sur un volet roulant prévu à cet effet.

Selon des caractéristiques avantageuses, éventuellement combinées :
- le pied et la tête de la noix forment un profil en T ; et
- le barillet présente des moyens adaptés à contraindre la tête de la noix vers l'ouverture de la rainure dans ladite deuxième position.

Avantageusement, il n'y a pas de jeu entre le dispositif anti-intempéries et la lame. La barre sera fixée sans jeu et il n'y aura pas de battement de celle-ci par rapport au tablier lorsque celui-ci sera soumis à un jeu de pression / dépression en cas d'intempéries.

Selon des caractéristiques avantageuses, éventuellement combinées:
- le barillet est monté selon une liaison pivot glissant dans le cylindre, et lesdits moyens adaptés à contraindre la tête de la noix vers l'ouverture de la rainure sont un ressort disposé entre le barillet et le cylindre, ces deux éléments présentant un perçage radial traversant destiné à recevoir une goupille dans ladite seconde position, de manière à bloquer la liaison pivot glissant dans cette position ;
- la tête de la noix est dimensionnée de manière à être en ajustement serré avec la rainure dans ladite deuxième position ; et
- le cylindre est adapté à être inséré dans un perçage prévu à cet effet dans la barre et le cylindre présente des portis filetées ou taraudées à ses extrémités de manière à être enserré sur la barre par des éléments respectivement taraudées ou filetés ;
- la barre anti-intempéries comporte le dispositif anti-intempéries tel que décrit ci-dessus ; et/ou
- l'ensemble comporte en outre un coffrage adapté à enrouler le tablier, le coffrage présentant au moins un point d'ancrage pour y fixer l'extrémité d'une barre anti-intempéries.

L'invention concerne selon un autre aspect un tablier de volet roulant anti-intempéries composé d'une pluralité de lames articulées entre elles, présentant au moins une lame présentant sur sa face intérieure une rainure de profil correspondant au profil de la noix d'un dispositif tel que décrit ci-dessus.

Selon encore un autre aspect, l'invention concerne un procédé selon l'objet de la revendication 9.

L'invention sera mieux comprise à la lecture de la description d'un exemple de réalisation, donnée à titre uniquement illustratif et non limitatif en référence aux dessins annexés sur lesquels :
- la figure 1 est une vue en coupe d'un dispositif anti-intempéries présenté devant une lame selon l'invention ;
- la figure 2 est une vue en coupe du même dispositif dans une position intermédiaire de montage ;
- la figure 3 est une vue du même dispositif dans une position montée ;
- la figure 4 est une vue en coupe du même dispositif dans une position montée et goupillée.
- la figure 5 est une vue en coupe longitudinale d'un tablier de volet roulant pourvu d'un dispositif anti-intempéries selon l'invention ;
- la figure 6 est une vue de face selon la ligne brisée VI-VI de la figure 5 ;

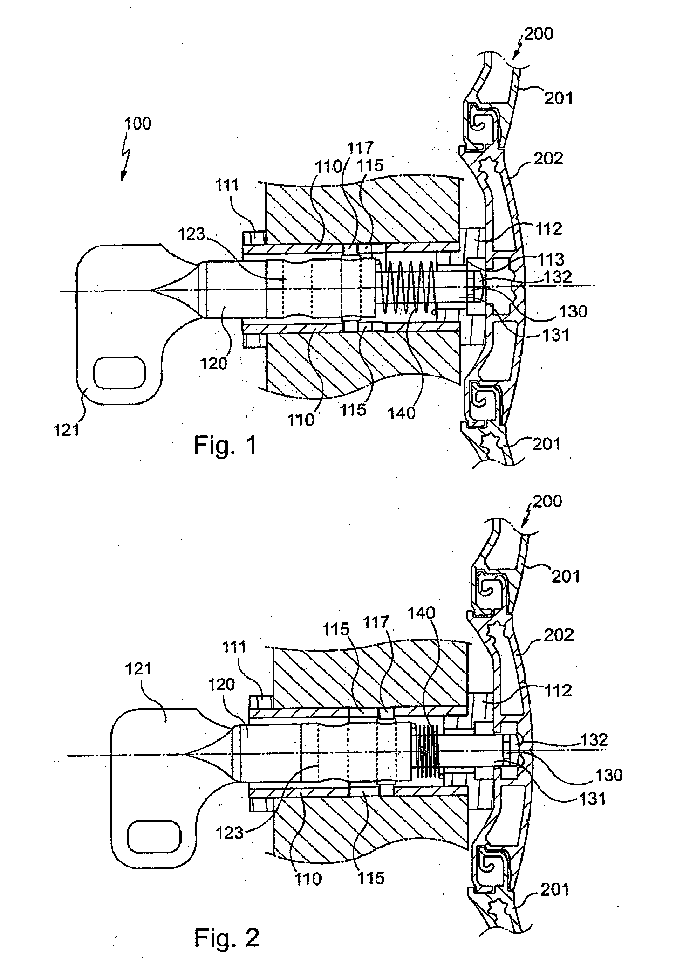

Comme visible en figure 1, un tablier 200 de volet roulant pour un ouvrant de bâtiment est constitué d'une pluralité de lames 201, 202, articulées entre elles. Les extrémités de chacune des lames coulissent dans deux rails fixés sur les côtés latéraux de l'ouverture du bâtiment telle qu'une porte ou une fenêtre (non représentés).

Pour augmenter la résistance du volet aux intempéries, une barre 300 anti-intempéries est fixée au tablier de manière sensiblement perpendiculaire à la direction longitudinale des lames qui le composent. La barre 300 est fixée au tablier 200 à l'aide d'un dispositif anti-intempéries 100 selon l'invention.

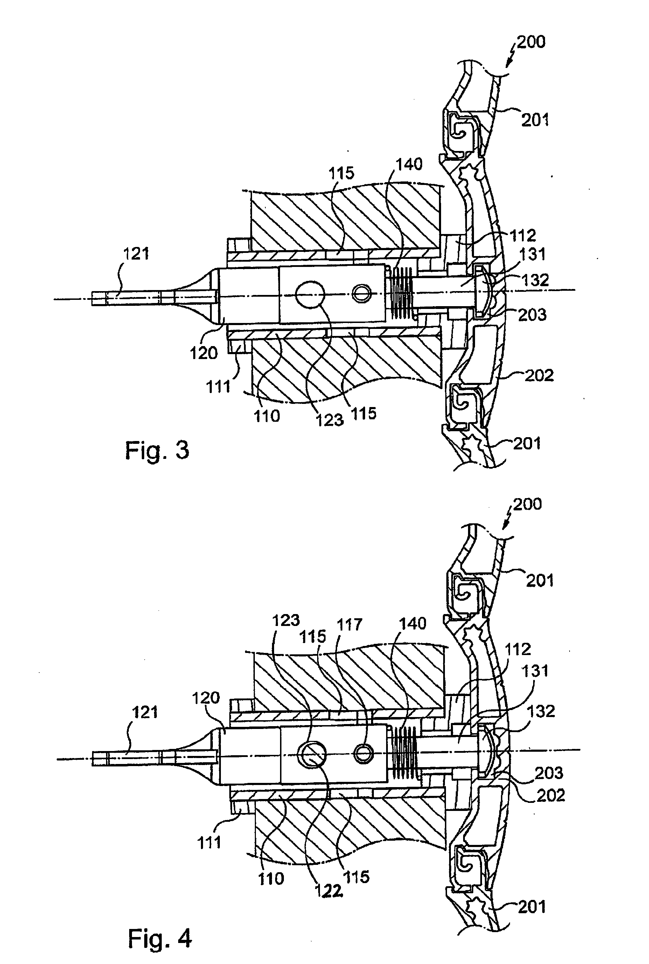

Le dispositif 100 est inséré dans un trou 301 pratiqué à cet effet dans la barre 300. Le dispositif comporte un cylindre 110 et un barillet 120 montés à rotation dans le cylindre. Le barillet présente à l'une de ses extrémités une noix 130 présentant un pied 131 et une tête 132 sensiblement plates. Comme visible plus particulièrement en figures 2 et 3, la tête 132 présente dans sa plus grande largeur une section de profil plus grande que celle du pied 131. Le pied et la tête de la noix forment conjointement un profil en T comme visible plus particulièrement en figure 3.

A son extrémité opposée, le barillet présente une poignée de manipulation en forme de clé 121.

Le cylindre 100 est fixé dans le trou 301 à l'aide d'un écrou 111 vissé sur une partie taraudée d'une extrémité du cylindre et une vis bouchon 112 vissée sur une partie taraudée de l'extrémité opposée du cylindre. Ainsi, le cylindre est enserré sur la barre par des éléments taraudés et filetés qui sont vissés sur et dans le cylindre 110.

Un ressort 140 est monté autour du pied 131 de la noix 130. Le ressort 140 vient appuyer à l'une de ses extrémités sur un épaulement 121 formé entre le barillet et le pied 131 et, à son autre extrémité, sur la face intérieure de la vis bouchon 112. Ainsi, le ressort 140 exerce une action de rappel sur la noix 130 et le barillet 120 telle que visible en figure 1.

Afin de limiter le débattement de l'ensemble barillet 120 - noix 130 par rapport au cylindre 110, une goupille 117 est insérée selon un ajustement serré dans un perçage prévu à cet effet dans le barillet 120. Les extrémités de la goupille 117 dépassent du barillet 120 et viennent s'insérer dans des encoches 115 prévues de part et d'autre dans le cylindre 110. Ces encoches 115 présentent une forme en L permettant dans un premier temps un débattement longitudinal du barillet 120 dans le cylindre 110 tel que visible entre la figure 1 et la figure 2, puis; dans un second temps, un débattement en rotation selon un quart de tour tel que visible entre les figures 2 et 3.

La vis bouchon 112 présente à son extrémité opposée à la face 114 un lamage 113 dimensionné de manière à noyer la tête 132 de la noix 130 lorsqu'elle est en position inutilisable tel que visible en figure 1.

Un système de goupillage est prévu entre le cylindre 110 et le barillet 120 une fois que les deux pièces sont dans la position visible en figures 3 et 4. A cet effet, un trou 123 est percé dans le barillet 120 et deux trous 116 correspondants sont prévus dans le cylindre 110. En outre, des perçages non représentés sont effectués dans la barre 300 pour y insérer une goupille 122 telle que visible en figure 4 de manière à bloquer le barillet et le cylindre dans leur position relative telle que visible en figures 3 et 4.

Au moins une lame 202 présente sur sa face intérieure une rainure 203 de profil sensiblement correspondant au profil de la tête 132 de la noix 130 et de son pied 131. L'ajustement entre la tête de la noix 132 et la rainure 203 est un ajustement serré de manière à limiter le jeu.

Dans le mode de réalisation représenté, les autres lames composant le tablier du volet roulant sont des lames classiques ne comportant pas une telle rainure 203. Cependant, d'autres lames du type de la lame 202 présentant une rainure 203 sont insérées à intervalles réguliers dans le tablier permettant d'y fixer, à chaque fois, un dispositif anti-intempéries tel que représenté en figures 1 à 4. D'une manière générale, dans l'exemple de réalisation, une lame du type de la lame 202 est insérée tous les 50 cms dans le tablier.

En pratique, pour monter un dispositif anti-intempéries selon l'invention, l'opérateur procède selon les quatre étapes telle que visibles en figures 1 à 4 respectivement.

Dans un premier temps, l'opérateur présente, devant le tablier 200, la barre 300 préalablement équipée du dispositif 100. Dans cette position, la tête 132 de la noix se trouve noyée dans le lamage 113 et sensiblement en regard de la rainure 203. Dans cette position, la plus grande largeur de la tête de la noix est sensiblement parallèle à la direction longitudinale de la rainure.

Dans une seconde étape, l'opérateur appuie sur la clé 121 déplaçant ainsi le barillet 120 en translation dans le cylindre 110. Les extrémités de la goupille 117 se déplacent alors dans les portions longitudinales des encoches 115 et la tête 132 pénètre la rainure 203, sa plus grande largeur étant sensiblement parallèle à la direction longitudinale de la rainure. Ce mouvement se fait à l'encontre du ressort 140 qui se trouve alors comprimé comme visible en figure 2.

Dans une troisième étape, l'opérateur applique une rotation d'un quart de tour à la clé 121, ce qui a pour effet d'entraîner en rotation la noix 130 et d'engager ainsi la tête 132 dans le profil correspondant de la rainure 203. Ainsi, le dispositif 100 se trouve fixé à la lame 202. Durant ce mouvement, les extrémités de la goupille 122 se déplacent dans les parties radiales des encoches 115.

Dans une quatrième étape, l'opérateur insère une goupille 122 à travers les trous non représentés de la barre 300, les trous 116 du cylindre 110 et le trou 123 du barillet 120 de manière à bloquer l'ensemble dans cette position, pour éviter d'une part les trop grandes contraintes sur le ressort 140 en cas de pression ou dépression appliquée aux volets, d'autre part, par mesure de sécurité, pour éviter un déverrouillage intempestif du dispositif anti-intempéries.

Ainsi, on comprendra que, d'une manière avantageuse, un opérateur seul peut mettre en place un dispositif anti-intempéries d'un seul geste combinant translation et rotation puis en sécurisant l'ensemble à l'aide d'une goupille. Il en résulte un gain de temps et d'efficacité non négligeable en situation d'intempéries.

La tête 132 de la noix 130 étant ajustée de manière serrée dans la rainure 203 contribue à éliminer le jeu entre ceux-ci. Le seul jeu subsistant entre la barre 300 et le tablier 200 correspond au jeu laissé par la goupille 122 ainsi qu'à la dureté du ressort 140 qui précontraint la barre 300 contre le tablier 200.

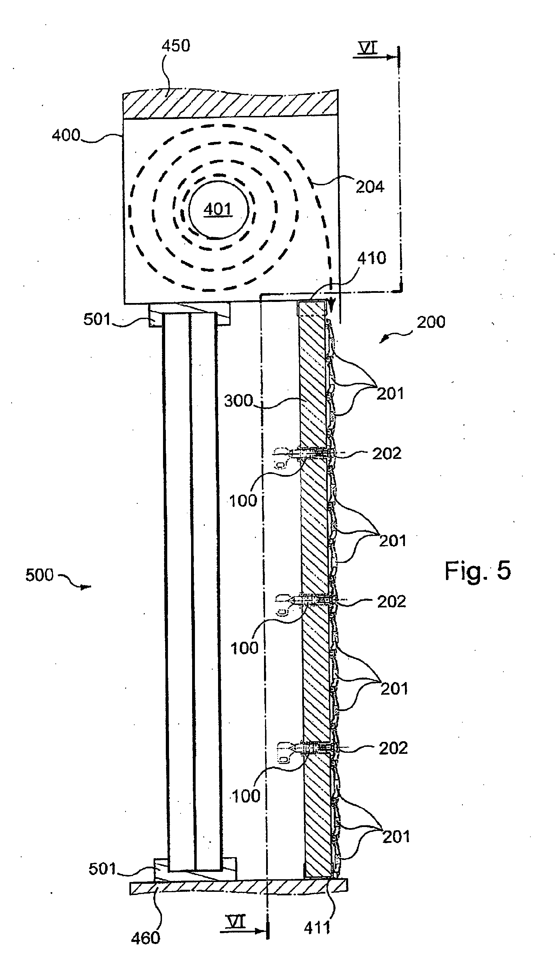

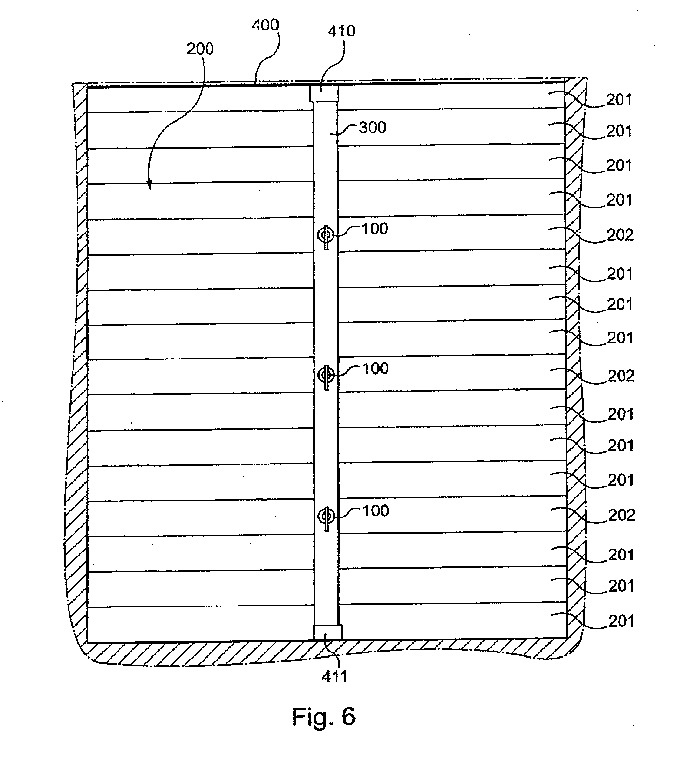

Comme visible en figures 5 et 6, le tablier de volet roulant selon l'invention est composé d'une pluralité de lames 201, 202 articulées entre elles. Le tablier présente à intervalles réguliers des lames du type de la lame 202, la barre 300 présentant des dispositifs 100 à la hauteur des lames 202 lorsque le volet est entièrement fermé.

Comme visible plus particulièrement en figure 5, un coffrage 400 présente un cylindre rotatif 400 adapté à enrouler le tablier 200 qui est représenté de manière schématique par une ligne pointillée 204 à l'intérieur du coffrage 400 par souci de simplification. Ce coffrage est solidement fixé au mur du bâtiment 450. Un ouvrant 500 tel qu'une porte ou une fenêtre est disposé dans un cadre 501 fixé par une extrémité au coffrage 400 et par une autre extrémité à la partie basse 460 d'où l'ouverture dans le bâtiment.

La barre anti-intempéries 300 est fixée par ses deux extrémités à des points d'ancrage 410 et 411 respectivement fixés sur le coffrage 400 et sur la partie basse de l'ouverture du bâtiment 460. Ces points d'ancrage sont en pratique des profilés en U fermés à l'une de leurs extrémités de manière à servir de butée à la barre 300. Les points d'ancrage 410 et 411 sont disposés avec leurs butées orientées tête-bêche. De cette manière, la barre 300 est d'abord présentée en biais face au tablier 200 avant d'être pivotée en butée contre les points d'ancrage 410 et 411 selon une rotation sensiblement autour de son centre dans un plan parallèle à celui formé par le tablier. Une fois la barre disposée dans cette position visible plus particulièrement en figure 6, les dispositifs 100 sont verrouillés par l'opérateur qui procède selon les quatre étapes visibles en figures 1 à 4 telles que décrites précédemment. Dans un mode de réalisation alternatif non représenté, l'une des butées 410, 411 est remplacée par un trou pratiqué respectivement soit dans le coffrage, soit dans la partie basse 460 et destiné à accueillir une extrémité de la barre 300. D'une manière plus générale, tout type de dispositif formant point d'ancrage et permettant de maintenir solidement la barre à ces extrémités au niveau du coffrage 400 et de la partie basse 460 peut être envisagé dans une variante à la portée de l'homme du métier sans sortir du cadre de l'invention.

Selon une variante avantageuse non représentée, le coffrage 400 est renforcé pour supporter le point d'ancrage 410 par un tube ou un profilé prévu horizontalement. On peut prévoir également un élément rapporté en plus du coffrage tel qu'une barre transversale pour fixer la barre verticale.

On peut bien entendu prévoir plusieurs barres verticales par tablier, les lames spéciales ayant le même profil sur toute leur longueur. Pour cela, il est nécessaire de prévoir des ancrages correspondants en haut et en bas du tablier, ce qui est à la portée de l'homme du métier.

Dans un mode de réalisation alternatif non représenté, le pied et la tête de la noix forment un profil en queue d'aronde et la rainure présente un profil en queue d'aronde correspondant permettant de limiter le jeu. On notera par ailleurs que tout profil de noix présentant une section de profil à tête plus grande que le pied peut être aisément adapté par l'homme du métier sans sortir du cadre de l'invention.

La barre 300 présente dans l'exemple illustré un profil carré, mais elle peut présenter dans des modes de réalisation alternatifs non représentés toute autre section adaptée à être percée pour supporter un dispositif 100 selon l'invention et à présenter une résistance en flexion suffisante pour supporter les intempéries.

Selon un mode de réalisation non représenté, le tablier peut être entièrement constitué de lames du type de la lame 202, ce qui permet de placer librement les dispositifs anti-intempéries sur le tablier.

L'exemple de réalisation décrit un volet roulant selon une direction verticale, mais l'invention ne se limite pas à ce type de volet et s'applique notamment aux volets roulants selon une direction horizontale.

Bien entendu, de nombreuses modifications peuvent être apportées à l'exemple de réalisation décrit précédemment sans sortir du cadre de l'invention, comme elle est définie dans les revendications.

## Revendications

1. Ensemble comportant un tablier (200) de volet roulant composé d'une pluralité de lames (201, 202) articulées entre elles, une barre (300) anti-intempéries et un dispositif (100) anti-intempéries adapté à fixer la barre anti-intempéries au tablier de manière sensiblement perpendiculaire à la direction longitudinale des lames qui le composent, **caractérisé en ce que** le dispositif (100) anti-intempéries présente un cylindre (110) adapté à être fixé à la barre, et un barillet (120) monté à rotation dans le cylindre, le barillet se terminant à une extrémité par une noix (130) présentant un pied (131) et une tête (132) sensiblement plate ayant, dans sa plus grande largeur, une section de profil plus grande que le pied, le barillet étant adapté à pivoter dans le cylindre sur sensiblement un quart de tour depuis une première position dans laquelle la tête de la noix pénètre une rainure (203) de profil correspondant au profil de la noix pratiquée sur la face intérieure de l'une au moins des lames (202) du tablier et dans laquelle première position, la plus grande largeur de la tête (132) est sensiblement parallèle à la direction longitudinale de la rainure vers une deuxième position dans laquelle la tête engage la rainure, et dans laquelle la plus grande largeur de la tête est sensiblement perpendiculaire à la direction longitudinale de la rainure fixant ainsi le dispositif à ladite au moins une lame (202).

2. Ensemble selon la revendication 1, **caractérisé en ce que** le pied (131) et la tête (132) de la noix (130) forment un profil en T.

3. Ensemble selon la revendication précédente, **caractérisé en ce que** le barillet (120) présente des moyens (140) adaptés à contraindre la tête de la noix vers l'ouverture de la rainure dans ladite deuxième position.

4. Ensemble selon la revendication précédente, **caractérisé en ce que** le barillet (120) est monté selon une liaison pivot glissant dans le cylindre (110), et **en ce que** lesdits moyens (140) adaptés à contraindre la tête (132) de la noix vers l'ouverture de la rainure (203) sont un ressort (140) disposé entre le barillet (120) et le cylindre (110), ces deux éléments présentant un perçage (123) radial traversant destiné à recevoir une goupille (122) dans ladite seconde position, de manière à bloquer la liaison pivot glissant dans cette position.

5. Ensemble selon l'une quelconque des revendications précédentes, **caractérisé en ce que** la tête (132) de la noix (130) est dimensionnée de manière à être en ajustement serré avec la rainure (203) dans ladite deuxième position.

6. Ensemble selon l'une quelconque des revendications précédentes, **caractérisé en ce que** le cylindre (110) est adapté à être inséré dans un perçage prévu à cet effet dans la barre et le cylindre présente des portions filetées ou taraudées à ses extrémités de manière à être enserré sur la barre par des éléments (111, 112) respectivement taraudées ou filetés.

7. Ensemble selon l'une quelconque des revendications 1 à 6, **caractérisé en ce que** ladite barre (300) comporte ledit dispositif (100) anti-intempéries.

8. Ensemble selon l'une quelconque des revendications 1 à 7, **caractérisé en ce qu'**il comporte en outre un coffrage (400) adapté à enrouler le tablier, le coffrage présentant au moins un point d'ancrage (410) pour y fixer l'extrémité d'une barre (300) anti-intempéries.

9. Procédé de mise en place d'un dispositif anti-intempéries sur une barre (300) anti-intempéries et sur un tablier (200) de volet roulant composé d'une pluralité de lames (201, 202) articulées entre elles, **caractérisé en ce que** ledit dispositif (100), ladite barre (300) anti-intempéries et ledit tablier (200) sont ceux d'un ensemble selon l'une quelconque des revendications 1 à 8, et **en ce que** le procédé comporte les étapes consistant à :
- fixer le dispositif (100) sur la barre (300) anti-intempéries,
- présenter la barre (300) équipée du dispositif (100) au tablier de manière sensiblement perpendiculaire à la direction longitudinale des lames (200) qui le composent,
- faire pivoter le barillet (120) sur sensiblement un quart de tour depuis une première position dans laquelle la tête de la noix (130) pénètre la rainure (203) de profil correspondant au profil de la noix pratiquée sur la face intérieure de l'une au moins des lames du tablier, et dans laquelle première position la plus grande largeur de la tête est sensiblement parallèle à la direction longitudinale de la rainure vers une deuxième position dans laquelle la tête engage la rainure, et dans laquelle la plus grande largeur de la tête est sensiblement perpendiculaire à la direction longitudinale de la rainure en fixant ainsi le dispositif à ladite au moins une lame.

## Patentansprüche

1. Einrichtung, enthaltend einen Rollladenpanzer (200), der aus einer Mehrzahl von aneinander angelenkten Lamellen (201, 202) zusammengesetzt ist, einen Wetterschutzstab (300) und eine Wetterschutzvorrichtung (100), die dazu ausgelegt ist, den Wetterschutzstab im Wesentlichen senkrecht zur Längsrichtung der den Rollladenpanzer zusammensetzenden Lamellen an diesen zu befestigen, **dadurch gekennzeichnet, dass**
die Wetterschutzvorrichtung (100) einen Zylinder (110) aufweist, der dazu ausgelegt ist, an den Stab befestigt zu werden, sowie einen Schaft (120), der drehbar im Zylinder gelagert ist, wobei der Schaft an einem Ende mit einer Nuss (130) endet, die ein Fußteil (131) und ein im Wesentlichen flaches Kopfteil (132) aufweist, das an seiner breitesten Stelle einen größeren Profilquerschnitt hat als das Fußteil, wobei der Schaft dazu ausgelegt ist, in dem Zylinder im Wesentlichen um eine Vierteldrehung ausgehend von einer ersten Stellung, in welcher das Kopfteil der Nuss in eine Nut (203) eindringt, die im Profil dem Profil der Nuss entspricht und auf der Innenseite von zumindest einer der Lamellen (202) des Panzers ausgeführt ist, und in welcher ersten Stellung die größere Breite des Kopfteils (132) im Wesentlichen parallel zur Längsrichtung der Nut verläuft, bis zu einer zweiten Stellung zu schwenken, in welcher das Kopfteil in die Nut eingreift und in welcher die größere Breite des Kopfteils im Wesentlichen senkrecht zur Längsrichtung der Nut verläuft, wodurch die Vorrichtung an die zumindest eine Lamelle (202) befestigt wird.

2. Einrichtung nach Anspruch 1,
**dadurch gekennzeichnet, dass** das Fußteil (131) und das Kopfteil (132) der Nuss (130) ein T-förmiges Profil bilden.

3. Einrichtung nach dem vorangehenden Anspruch,
**dadurch gekennzeichnet, dass** der Schaft (120) Mittel (140) aufweist, die dazu ausgelegt sind, in der zweiten Stellung das Kopfteil der Nuss zur Öffnung der Nut hin zu beaufschlagen.

4. Einrichtung nach dem vorangehenden Anspruch,
**dadurch gekennzeichnet, dass** der Schaft (120) über eine Gleit-Schwenk-Verbindung in dem Zylinder (110) gelagert ist und dass die Mittel (140) zum Beaufschlagen des Kopfteils (132) der Nuss zur Öffnung der Nut (203) hin eine Feder (140) sind, die zwischen Schaft (120) und Zylinder (110) angeordnet ist, wobei diese beiden Elemente eine radial durchgehende Bohrung (123) aufweisen, die dazu bestimmt ist, einen Stift (122) in der zweiten Stellung aufzunehmen, so dass die Gleit-Schwenk-Verbindung in dieser Stellung gesichert wird.

5. Einrichtung nach einem der vorangehenden Ansprüche,
**dadurch gekennzeichnet, dass** das Kopfteil (132) der Nuss (130) so dimensioniert ist, dass es in der zweiten Stellung in Presspassung mit der Nut (203) gelangt.

6. Einrichtung nach einem der vorangehenden Ansprüche,
**dadurch gekennzeichnet, dass** der Zylinder (110) dazu ausgelegt ist, in eine Bohrung eingeführt zu werden, die dazu in dem Stab vorgesehen ist, und der Zylinder Außen- oder Innengewindeabschnitte an seinen Enden aufweist, so dass er über jeweilige Innengewinde- oder Außengewindeelemente (111, 112) an den Stab angebracht wird.

7. Einrichtung nach einem der Ansprüche 1 bis 6,
**dadurch gekennzeichnet, dass** der Stab (300) die Wetterschutzvorrichtung (100) aufweist.

8. Einrichtung nach einem der Ansprüche 1 bis 7,
**dadurch gekennzeichnet, dass** sie ferner einen Kasten (400) aufweist, der dazu ausgelegt ist, den Rollladenpanzer aufzurollen, wobei der Kasten zumindest einen Verankerungspunkt (410) aufweist, um daran das Ende eines Wetterschutzstabes (300) zu befestigen.

9. Verfahren zum Einsetzen einer Wetterschutzvorrichtung an einen Wetterschutzstab (300) und an einen Rollladenpanzer (200), der aus einer Mehrzahl von aneinander angelenkten Lamellen (201, 202) zusammengesetzt ist,
**dadurch gekennzeichnet, dass** die Vorrichtung (100), der Wetterschutzstab (300) und der Rollladenpanzer (200) zu einer Einrichtung nach einem der Ansprüche 1 bis 8 gehören und dass das Verfahren die nachfolgenden Schritte umfasst:
- Befestigen der Vorrichtung (100) an den Wetterschutzstab (300),
- Vorbringen des mit der Vorrichtung (100) ausgestatteten Stabs an den Rollladenpanzer im Wesentlichen senkrecht zur Längsrichtung der diesen zusammensetzenden Lamellen (200),
- Verschwenken des Schafts (120) im Wesentlichen um eine Vierteldrehung ausgehend von einer ersten Stellung, in welcher das Kopfteil der Nuss (130) in die Nut (203) eindringt, die im Profil dem Profil der Nuss entspricht und auf der Innenseite von zumindest einer der Lamellen des Panzers ausgeführt ist und in welcher ersten Stellung die größere Breite des Kopfteils im Wesentlichen parallel zur Längsrichtung der Nut verläuft, bis zu einer zweiten Stellung, in welcher das Kopfteil in die Nut eingreift und in welcher die größere Breite des Kopfteils im Wesentlichen senkrecht zur Längsrichtung der Nut verläuft, wodurch die Vorrichtung an die zumindest eine Lamelle befestigt wird.

## Claims

1. Assembly comprising a roller shutter apron (200) having a plurality of strips (201, 202) which are articulated to one another, a weatherproof bar (300) and a weatherproof device (100) adapted to fix the weatherproof bar to the apron in a manner substantially perpendicular to the longitudinal direction of the strips of which it is made, **characterised in that** the weatherproof device (100) has a cylinder (110) adapted to be fixed to the bar, and a barrel (120) rotatably mounted in the cylinder, the barrel ending at one end in a plug (130) having a foot (131) and a substantially planar head (132) having, at its largest width, a larger profile section than the foot, the barrel being adapted to pivot in the cylinder through substantially a quarter turn from a first position in which the head of the plug penetrates a groove (203) which has a profile corresponding to the profile of the plug formed in the inner face of at least one of the strips (202) of the apron, and in which first position the largest width of the head (132) is substantially parallel to the longitudinal direction of the groove, to a second position in which the head engages the groove, and in which the largest width of the head is substantially perpendicular to the longitudinal direction of the groove, thus fixing the device to said at least one strip (202).

2. Assembly according to claim 1, **characterised in that** the foot (131) and the head (132) of the plug (130) form a T-shaped profile.

3. Assembly according to the preceding claim, **characterised in that** the barrel (120) has means (140) adapted to force the head of the plug towards the opening of the groove in said second position.

4. Assembly according to the preceding claim, **characterised in that** the barrel (120) is mounted along a sliding pivot link in the cylinder (110), and **in that** said means (140) adapted to force the head (132) of the plug towards the opening of the groove (203) are a spring (140) disposed between the barrel (120) and the cylinder (110), these two elements having a radial through-hole (123) for receiving a pin (122) in said second position, so as to lock the sliding pivot link in this position.

5. Assembly according to any of the preceding claims, **characterised in that** the head (132) of the plug (130) is sized so as to fit tightly together with the groove (203) in said second position.

6. Assembly according to any of the preceding claims, **characterised in that** the cylinder (110) is adapted to be inserted into a hole provided for this purpose in the bar and the cylinder has threaded or tapped portions at its ends thereof so as to be held on the bar by respectively tapped or threaded elements (111, 112).

7. Assembly according to any of claims 1 to 6, **characterised in that** said bar (300) comprises said weatherproof device (100).

8. Assembly according to any of claims 1 to 7, **characterised in that** it further comprises a casing (400) adapted to roll up the apron, the casing having at least one anchoring point (410) for fixing the end of a weatherproof bar (300) thereto.

9. Method for fitting a weatherproof device on a weatherproof bar (300) and on a roller shutter apron (200) having a plurality of strips (201, 202) which are articulated to one another, **characterised in that** said device (100), said weatherproof bar (300) and said apron (200) are those of an assembly according to any of claims 1 to 8, and **in that** the method comprises the steps of:
- fixing the device (100) to the weatherproof bar (300),
- presenting the bar (300) provided with the device (100) to the apron in a manner substantially perpendicular to the longitudinal direction of the strips (200) of which it is made,
- pivoting the barrel (120) through substantially a quarter turn from a first position in which the head of the plug (130) penetrates the groove (203) which has a profile corresponding to the profile of the plug formed in the inner face of at least one of the strips of the apron, and in which first position the largest width of the head is substantially parallel to the longitudinal direction of the groove, to a second position in which the head engages the groove, and in which the largest width of the head is substantially perpendicular to the longitudinal direction of the groove, thus fixing the device to the at least one strip.
